# EUROPÄISCHE PATENTSCHRIFT

(11) **EP 4 042 708 B1**
(45) Veröffentlichungstag und Bekanntmachung des Hinweises auf die Patenterteilung: **01.11.2023**
(21) Anmeldenummer: 20771518.6
(22) Anmeldetag: 09.09.2020
(51) Int. Cl.: H04Q 1/14

(54) **ABZIEHVORRICHTUNG FÜR EIN ÜBERSPANNUNGSSCHUTZMAGAZIN**
PULL-OFF DEVICE FOR AN OVERVOLTAGE PROTECTION MAGAZINE
DISPOSITIF D'EXTRACTION POUR UN CHARGEUR DE PROTECTION CONTRE LES SURTENSIONS

(30) Priorität: 09.10.2019 DE 102019127095
(43) Veröffentlichungstag der Anmeldung: 17.08.2022
(73) Patentinhaber: Westnetz GmbH, 44139 Dortmund (DE)
(72) Erfinder: EPPMANN, Frank, 44625 Herne (DE)
(74) Vertreter: Cohausz & Florack
(86) Internationale Anmeldenummer: PCT/EP2020/075194
(87) Internationale Veröffentlichungsnummer: WO 2021/069171

(56) Entgegenhaltungen:
- EP-A1- 2 566 181
- GB-A- 2 337 872
- US-B2- 6 821 153

## Beschreibung

Die vorliegende Anmeldung betrifft eine Abziehvorrichtung für ein Überspannungsschutzmagazin und eine Verwendung einer Abziehvorrichtung.

In der heutigen Zeit kommen vermehrt Multifunktionsgehäuse (MFG) bei Kommunikationssystemen, insbesondere Breitbandkommunikationssystemen (z.B. basierend auf den Technologien, wie UMTS, DSL, WiMAX etc.), zum Einsatz, insbesondere für eine so genannte FTTC (fibre to the curb, Faser an den Randstein) Verkabelung.

In derartigen oder ähnlichen Verteilergehäusen bzw. Verteilschränken werden für die elektrischen Verbindungen (insbesondere Kupferverbindung) von den Teilnehmerkarten zu den Verteilerschränken elektrische Anschlussleisten eingesetzt. Insbesondere kommen hierbei Anschlussleisten der Firma Cobinet zum Einsatz, vorzugsweise so genannte LSA-HD^{®} Anschlussleisten.

Zum Schutz der aktiven Technik in den Verteilerschränken ist jede verbaute Anschlussleiste mit einem Schutz in Form eines Überspannungsschutzmagazins versehen. Insbesondere ist auf jeder elektrischen Anschlussleiste ein entsprechendes Überspannungsschutzmagazin angebracht, insbesondere aufgesetzt.

Beispielsweise während einer Wartung oder dergleichen ist es erforderlich, Zugang zu einer (oder mehrerer) Anschlussleiste(n) zu erhalten. Hierzu wird dann das angebrachte Überspannungsschutzmagazin von der entsprechenden Anschlussleiste entfernt bzw. abgezogen.

Problematisch bei den bekannten Anschlussleisten und Überspannungsschutzmagazinen ist jedoch, dass ein Überspannungsschutzmagazin in der Regel sehr fest auf einer Anschlussleiste sitzt. So sind aufgrund der hohen Stromstoßbelastbarkeit von 5 kA bis 10kA (je nach angeschlossenen Drahtdurchmesser) die Federkraft der Anschlussleisten-Kontakte sowie die Kontakte an dem metallischen Halter (der die mindestens eine Anschlussleiste trägt) einer Anschlussleiste sehr hoch. Das Dokument D1: EP2566181, (3M Innovative Property Company) publiziert am 06-03-2013, offenbart zusäatzlich eine Funktionsmodul für eine Telekommunikationsleitung für ein Telekommunikationssystem.

Aufgrund des festen Sitzes auf der Anschlussleiste kann ein Überspannungsschutzmagazin nur schlecht entfernt bzw. abgezogen werden. In der Praxis wird oft die gesamte Anschlussleiste von dem Anschlussleistenhalter aufgrund des festen Sitzes mitabgezogen. Hierbei besteht das Risiko, dass die Rangierung der Teilnehmerkarte abgerissen wird. Dies wiederum führt zu Ausfällen von Internetanschlüssen.

Auch kann es dazu kommen, dass die Befestigungsfahnen der Anschlussleiste und/ oder, bei einem Verkanten des Überspannungsschutzmagazins, die Platinenanschlussfahnen des Überspannungsableiters für die (LSA) Kontakte der Anschlussleiste abbrechen.

Zur Lösung des Problems wäre es denkbar, die verbauten Anschlussleisten und Überspannungsschutzmagazine auszutauschen. Ein Austausch der schon verbauten Anschlussleisten und Überspannungsschutzmagazine ist jedoch in der Praxis allein aufgrund der hohen Anzahl an verbauten Anschlussleisten und Überspannungsschutzmagazine nicht möglich.

Daher liegt der Anmeldung die Aufgabe zugrunde, eine Möglichkeit bereitzustellen, welche ein leichteres Abziehen bzw. Entfernen eines Überspannungsschutzmagazins von einer elektrischen Anschlussleiste ermöglicht und insbesondere ein Risiko eines Abziehens bzw. Entfernens der gesamten elektrischen Anschlussleiste zumindest reduziert.

Gemäß einem ersten Aspekt der Anmeldung wird die Aufgabe gelöst durch eine Abziehvorrichtung zum Abziehen eines auf einer elektrischen Anschlussleiste angebrachten Überspannungsschutzmagazins nach Anspruch 1. Die Abziehvorrichtung umfasst einen Basisabschnitt mit einem Vorsprung, eingerichtet zum Hintergreifen des angebrachten Überspannungsschutzmagazins. Die Abziehvorrichtung umfasst zwei an gegenüberliegenden Seiten des Basisabschnitts befestigte Abziehmodule. Die Abziehmodule sind eingerichtet, bei einem Abziehvorgang mit einer jeweiligen durch die Anschlussleiste bereitgestellten Anschlagsfläche derart zusammenzuwirken, dass durch eine Betätigung des jeweiligen Abziehmoduls eine Kraft durch den Vorsprung auf das angebrachte Überspannungsschutzmagazins ausgeübt wird, so dass das Überspannungsschutzmagazin von der Anschlussleiste abgezogen wird.

Indem im Gegensatz zum Stand der Technik anmeldungsgemäß ein Abziehwerkzeug zum Abziehen eines auf einer Anschlussleisten befestigten Überspannungsschutzmagazins in Form der anmeldungsgemäßen Abziehvorrichtung bereitgestellt wird, die über zwei seitlich angeordnete und betätigbare Abziehmodule verfügt, wird ein leichteres Abziehen bzw. Entfernen eines Überspannungsschutzmagazins von einer elektrischen Anschlussleiste ermöglicht und insbesondere das Risiko eines Abziehens bzw. Entfernens der gesamten elektrischen Anschlussleiste zumindest reduziert. Das Risiko, dass die Rangierung der Teilnehmerkarte abgerissen wird, wird ebenfalls zumindest reduziert. Dies wiederum führt dazu, dass Ausfälle von Internetanschlüssen vermieden werden können. Zudem kann das Risiko vermindert werden, dass die Befestigungsfahnen der Anschlussleiste und/oder, bei einem Verkanten des Überspannungsschutzmagazins, die Platinenanschlussfahnen des Überspannungsableiters für die (LSA) Kontakte der Anschlussleiste abbrechen.

Die anmeldungsgemäße Abziehvorrichtung weist einen Basisabschnitt auf. Der Basisabschnitt kann eine Länge bzw. Längserstreckung aufweisen, die zumindest der Länge des abzuziehenden Überspannungsschutzmagazins entspricht und/oder eine Höhe bzw. Höheerstreckung aufweisen, die zumindest der Höhe des abzuziehenden Überspannungsschutzmagazins entspricht.

An dem Basisabschnitt ist ein Vorsprung bzw. eine Kontaktnase angeordnet. Der Vorsprung ist insbesondere ein länglich ausgebildeter (stegförmiger) Vorsprung bzw. eine entsprechende (stegförmige) Kontaktnase. Der Vorsprung kann vorzugsweise an der unteren Kante bzw. einer unteren Längsseite des Basisabschnitts angeordnet sein. Der Vorsprung ist derart angeordnet, dass in einem angebrachten Abziehzustand eine Kante bzw. Unterseite des Überspannungsschutzmagazins hintergriffen werden kann. Beispielsweise kann der Vorsprung als (erste) Lasche gebildet sein.

Insbesondere kann eine Oberseite des Vorsprung in einem angebrachten Abziehzustand der Abziehvorrichtung, also wenn die Abziehvorrichtung an das abzuziehende Überspannungsschutzmagazin für einen Abziehvorgang angebracht ist, eine Unterseite des Überspannungsschutzmagazins (zumindest teilweise) unmittelbar kontaktieren bzw. daran anliegen. Durch das Hintergreifen, insbesondere durch den Kontakt zwischen dem Vorsprung und der Unterseite des Überspannungsschutzmagazins, ist eine Kraft (und damit eine Bewegung) von der Abziehvorrichtung auf das Überspannungsschutzmagazin übertragbar, insbesondere in eine Richtung, die von der Anschlussleiste weg weist.

Hierbei sei angemerkt, dass sich Richtungsangaben, wie unten, oben seitlich etc. stets auf den angebrachten Abziehzustand und das angebrachte Überspannungsschutzmagazin beziehen, wobei unten die Seite meint, die der Anschlussseite zugewandt ist und oben die Seite meint, die von der Anschlussseite weggewandt ist.

Darüber hinaus sind an den gegenüberliegenden Seiten des Basisabschnitts, insbesondere die gegenüberliegenden Breiteseiten des Basisabschnitts, jeweils ein (insbesondere manuell) betätigbares Abziehmodul angeordnet. Bei einem Abziehvorgang können die Abziehmodule vorzugsweise (nahezu) parallel bzw. gleichzeitig betätigt werden, um eine Kraftausübung durch die Abziehmodule zu bewirken.

Die Abziehmodule sind insbesondere derart eingerichtet und angeordnet, dass sie (in dem angebrachten Abziehzustand der Abziehvorrichtung) mit jeweiligen Anschlagsflächen zusammenwirken, die von der Anschlussleiste bereitgestellt werden. Zusammenwirken meint insbesondere, dass durch ein Betätigen eines Abziehmoduls eine Kraft auf die entsprechende Anschlagsfläche ausgeübt wird, derart, dass eine Gegenkraft, insbesondere Gegenbewegung, in die entgegengesetzte, von der Anschlussrichtung weg gerichtete Richtung durch den Vorsprung auf das Überspannungsschutzmagazins ausgeübt wird, so dass das Überspannungsschutzmagazin in einem Abziehvorgang abziehbar ist.

Anders ausgedrückt sind die Abziehmodule eingerichtet, bei einem Abziehvorgang mit einer jeweiligen durch die Anschlussleiste bereitgestellten Anschlagsfläche derart zusammenzuwirken, dass durch eine Betätigung des jeweiligen Abziehmoduls bzw. - mechanismus eine Kraft durch den Vorsprung auf das angebrachte Überspannungsschutzmagazins ausgeübt wird, so dass das Überspannungsschutzmagazin von der Anschlussleiste abgezogen wird.

Insbesondere wird anmeldungsgemäß erreicht, dass eine Kraft auf die Anschlussleiste bei einem Betätigen eines Abziehmoduls ausgeübt wird, die in Richtung des Halters wirkt, auf die die Anschlussleiste angebracht ist. Ein Abziehen der Anschlussleiste wird hierdurch verhindert.

Ferner wird eine Gegenkraft bzw. Gegenbewegung bei einem Betätigen eines Abziehmoduls bewirkt in eine entgegengesetzte Richtung, so dass durch den Vorsprung die Kraft bzw. Bewegung der Abziehvorrichtung, die durch eine Betätigung der Abziehmodule bewirkt wird, auf das Überspannungsschutzmagazin in Abziehrichtung übertragen wird. Das Überspannungsschutzmagazin kann von der Anschlussleiste abgezogen werden. In einfacher Weise ermöglicht die anmeldungsgemäße Abziehvorrichtung bzw. das anmeldungsgemäße Abziehwerkzeug ein Abziehen bzw. Entfernen eines Überspannungsschutzmagazins von einer Anschlussleiste.

Gemäß einer ersten Ausführungsform der anmeldungsgemäßen Abziehvorrichtung kann der Basisabschnitt ein plattenförmiges (insbesondere planes) Element sein, insbesondere mit einer im Wesentlichen rechtförmigen Grundfläche. An einer (unteren) Längsseite, insbesondere an der Kante der (unteren) Längsseite, kann der mindestens eine Vorsprung angeordnet sein und zumindest nahezu an der gesamten unteren Längsseite entlang verlaufen. Der Vorsprung bzw. die Kontaktnase kann gegenüber dem plattenförmigen Element, insbesondere der flächigen bzw. planen Oberfläche des plattenförmigen Elements, eine Höhe zwischen 1 mm und 50 mm aufweisen, vorzugsweise zwischen 1 mm und 3 mm. Hierdurch kann ein ausreichendes Hintergreifen bzw. ein ausreichender Kontakt zwischen dem Vorsprung und einer Unterseite des abzuziehenden Überspannungsschutzmagazins in einfacher Weise bereitgestellt werden.

Gemäß einer weiteren Ausführungsform der anmeldungsgemäßen Abziehvorrichtung kann der Vorsprung eine Länge (in Längsrichtung des plattenförmigen Elements gesehen) aufweisen, die im Wesentlichen der Länge des Überspannungsschutzmagazins entspricht. Die Länge ist insbesondere der Abstand zwischen den Kanten der Breitseiten des plattenförmigen Elements. Hierdurch kann ein gleichmäßiger Kontakt entlang der gesamten Länge des Überspannungsschutzmagazins hergestellt werden. Ein gleichmäßiges Abziehen ohne ein Verkanten kann ermöglicht werden, indem die von dem Vorsprung ausgeübte Kraft im Wesentlichen gleichmäßig auf das Überspannungsschutzmagazin übertragen werden kann.

Gemäß einer bevorzugten Ausführungsform der anmeldungsgemäßen Abziehvorrichtung kann an den zwei gegenüberliegenden Seiten des Basisabschnitts jeweils eine (insbesondere winklig zur planen Oberfläche des plattenförmigen Elements angeordnete) Vorkragung (bzw. Halterung) angeordnet sein. Die Vorkragung kann insbesondere an der oberen Längsseite, insbesondere der Kante der oberen Längsseite, des Basisabschnitts, insbesondere des plattenförmigen Elements, angeordnet sein. An jeder Vorkragung kann ein Abziehmodul zumindest formschlüssig befestigt sein. Die Vorkragung (auch als weiterer Vorsprung bezeichnet) kann insbesondere planparallel zur Oberseite (und Unterseite) des Überspannungsschutzmagazins während eines Abziehvorgangs bzw. in dem angebrachten Abziehzustand der Abziehvorrichtung verlaufen, während das plattenförmige Element insbesondere planparallel zu einer Seitenwand des Überspannungsschutzmagazins während eines Abziehvorgangs bzw. in dem angebrachten Abziehzustand der Abziehvorrichtung verlaufen kann.

Vorzugsweise können der Basisabschnitt und die Vorkragung einstückig gebildet sein. Beispielsweise kann eine Vorkragung als (zweite) Lasche gebildet sein. Insbesondere kann jede Vorkragung als (zweite) Lasche gebildet sein. Der Vorsprung kann vorzugsweise auf dem plattenförmigen Element stoffschlüssig befestigt sein, insbesondere angeschweißt sein.

Bei einer Ausführungsform kann ein Abziehmodul als Klapp- bzw. Faltmechanismus gebildet sein.

Gemäß einer besonders bevorzugten Ausführungsform der anmeldungsgemäßen Abziehvorrichtung kann ein Abziehmodul, vorzugsweise jedes Abziehmodul, durch einen Schraubenmechanismus gebildet sein. Ein Schraubenmechanismus erlaubt eine einfache Betätigung. Zudem kann durch eine Betätigung eines Schraubenmechanismus in definierter Weise eine Kraft ausgeübt und eine Bewegung erzeugt werden. Indem an beiden (Breit-)Seiten jeweils ein Schraubenmechanismus angeordnet ist, kann in einfacher Weise eine nahezu parallele Betätigung der Abziehmodule durch einen Nutzer erfolgen (z.B. abwechselndes Drehen des ersten und weiteren Schraubenmechanismus jeweils um eine bestimmte Anzahl an Drehungen (z.B. 1 bis 5 Umdrehungen)). Hierdurch kann ein Abziehen des Überspannungsschutzmagazins ohne Verkanten durchgeführt werden.

Vorzugsweise kann, gemäß einer weiteren Ausführungsform der Abziehvorrichtung, der Schraubenmechanismus eine mit dem Basisabschnitt (vorzugsweise stoffschlüssig) befestigte Schraubenmutter und eine Schraube aufweisen. Indem die Schraubenmuttern mit dem Basisabschnitt fest gekoppelt sind, kann eine Bewegung der Schraube auf den Basisabschnitt und damit auf den Vorsprung übertragen werden. Insbesondere kann der Schraubenmechanismus mit der bereitgestellten Anschlagsfläche derart zusammenwirken, dass durch ein Betätigen des Schraubenmechanismus eine Bewegung des Basisabschnitts und damit des Vorsprungs in eine Abziehrichtung bewirkt werden kann.

Gemäß einer bevorzugten Ausführungsform der anmeldungsgemäßen Abziehvorrichtung kann der Basisabschnitt an den gegenüberliegenden Seiten jeweils eine Vorkragung aufweisen (wie bereits beschrieben wurde). Vorzugsweise kann die Vorkragung die Schraubenmutter aufweisen. Insbesondere kann die Schraubenmutter durch eine Öffnung, insbesondere Bohrung, mit Innengewinde in der Vorkragung gebildet sein. Das Innengewinde kann zu dem Außengewinde der jeweils eingesetzten Schraube korrespondieren.

Gemäß einer besonders bevorzugten Ausführungsform kann jeder Schraubenmechanismus eingerichtet sein, derart, dass bei dem Abziehvorgang ein Ende der jeweiligen Schraube die jeweilige Anschlagsfläche kontaktiert und ein Betätigen (insbesondere Drehen) der jeweiligen Schraube eine Vergrößerung des Abstands zwischen der Vorkragung und der Anschlagsfläche (und damit zwischen dem Überspannungsschutzmagazin und der Anschlussleiste) bewirkt, so dass eine Kraft (und insbesondere eine Bewegung) durch den Vorsprung auf das angebrachte Überspannungsschutzmagazin ausgeübt wird und insbesondere das angebrachte Überspannungsschutzmagazin (in definierter Weise) abgezogen wird.

Ferner kann, gemäß einer weiteren Ausführungsform, der Abstand zwischen den an den gegenüberliegenden Seiten des Basisabschnitts befestigten Abziehmodulen zumindest größer sein als die Länge des Überspannungsschutzmagazins. Damit können die Schrauben seitlich von dem Überspannungsschutzmagazin verlaufen.

Grundsätzlich kann die Abziehvorrichtung aus einem beliebigen Material gebildet sein; so lange das Material eine ausreichende Festigkeit aufweist. Gemäß einer bevorzugten Ausführungsform der anmeldungsgemäßen Abziehvorrichtung kann der Basisabschnitt aus Metall gebildet sein, insbesondere Edelstahl. Beispielsweise kann das plattenförmige Element aus Edelstahl mit einer Dicke von 1 mm bis 5 mm gebildet sein. Alternativ oder zusätzlich kann der Vorsprung aus Metall gebildet sein, insbesondere Edelstahl.

Es versteht sich, dass unterschiedliche Komponenten der Abziehvorrichtung aus unterschiedlichen Materialien gebildet sein können. Beispielsweise kann eine Schraube aus einem anderen Material als der Basisabschnitt gebildet sein.

Anmeldungsgemäß ist demnach vorgesehen, dass zum Abziehen eines Überspannungsschutzmagazins von einer Anschlussleiste, insbesondere eine so genannte LSA-HD-Trennleiste der Firma Cobinet, eine Abziehvorrichtung bzw. ein Abzieher benutzt wird, der durch seinen Vorsprung bzw. Nase unter das Überspannungsschutzmagazin geklemmt und gegen zwei Nasen bzw. Anschlagsflächen an der Anschlussleiste, insbesondere der LSA-HD-Trennleiste, abgestützt wird.

Mit den Schrauben kann nun ein nahezu gleichmäßiger Druck aufgebaut werden, der das Überspannungsschutzmagazin (langsam) von der Anschlussleiste löst. Somit ist ein sicheres und zerstörungsfreies Lösen des Überspannungsschutzmagazins anmeldungsgemäß möglich.

Zudem ist von Vorteil, dass die anmeldungsgemäße Abziehvorrichtung nicht seitlich an dem Überspannungsschutzmagazin eingesetzt wird, sondern von vorne. An der Seite des Überspannungsschutzmagazins ist in der Regel kein Platz zum Ansetzen der Abziehvorrichtung, während für eine Ansetzung von vorne in der Regel ausreichend Platz in einem Verteilerschrank vorhanden ist.

Ferner kann gemäß einer weiteren Ausführungsform der anmeldungsgemäßen Abziehvorrichtung an dem Ende einer Schraube, welches die Anschlagsfläche bzw. die Nase kontaktiert, ein Gegenstück angebracht sein. Vorzugsweise kann ein Gegenstück beweglich, beispielsweise durch annieten, angebracht sein. Das Gegenstück kann eine größere Querschnittsfläche als die Schraube aufweisen. Hierdurch kann die wirkende Kraft auf eine größere Fläche verteilt werden. Das Risiko einer Beschädigung der Anschlagsfläche bzw. der Nase der Anschlussleiste kann reduziert werden.

Vorzugsweise kann, gemäß einer weiteren Ausführungsform der anmeldungsgemäßen Abziehvorrichtung, an einer oberen (Längs-)Seite des Basisabschnitts, vorzugsweise im Bereich der Mitte, ein Winkel angebracht sein, der zu der Außenform des abzuziehenden Überspannungsschutzmagazins korrespondiert. Insbesondere kann der Winkel so gebildet und angeordnet sein, dass in dem angebrachten Abziehzustand der Abziehvorrichtung der Vorsprung bzw. die Nase der Abziehvorrichtung nicht abrutschen kann.

Darüber hinaus kann gemäß einer weiteren Ausführungsform der anmeldungsgemäßen Abziehvorrichtung vorgesehen sein, dass an dem Basisabschnitt ein Griff, insbesondere eine Griffleiste, angeordnet ist. Der Griff, insbesondere die Griffleiste, kann eingerichtet sein zum (vollständigen) Abziehen eines bereits teilweise gelösten Überspannungsschutzmagazins, insbesondere wenn der Widerstand nicht mehr so groß ist.

Ein weiterer Aspekt der Anmeldung ist eine Verwendung einer zuvor beschrieben Abziehvorrichtung nach einem der vorherigen Ansprüche zum Abziehen eines auf einer elektrischen Anschlussleiste angebrachten Überspannungsschutzmagazins.

Die Merkmale der Abziehvorrichtungen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert, eigenständig erfinderisch sein.

Es gibt nun eine Vielzahl von Möglichkeiten, die anmeldungsgemäße Abziehvorrichtung und die anmeldungsgemäße Verwendung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Abziehvorrichtung gemäß der vorliegenden Anmeldung,
- Fig. 2: eine schematische Teilansicht des Ausführungsbeispiels einer Abziehvorrichtung nach Figur 1,
- Fig. 3: eine schematische Ansicht des Ausführungsbeispiels einer Abziehvorrichtung nach Figur 1 in einem angebrachten Abziehzustand der Abziehvorrichtung, und
- Fig. 4: eine schematische Teilansicht des Ausführungsbeispiels einer Abziehvorrichtung nach Figur 3 in dem angebrachten Abziehzustand der Abziehvorrichtung.

Nachfolgend werden für gleiche Elemente gleiche Bezugszeichen verwendet.

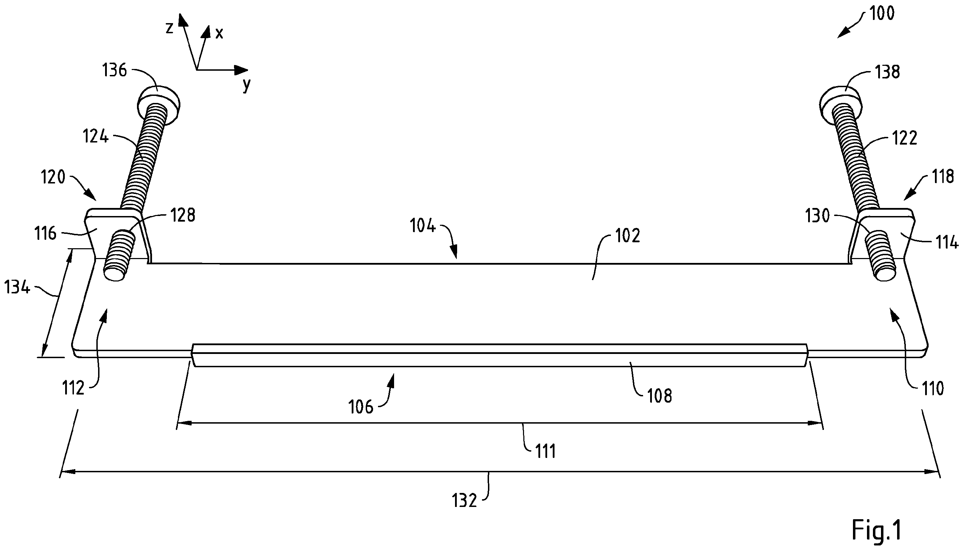

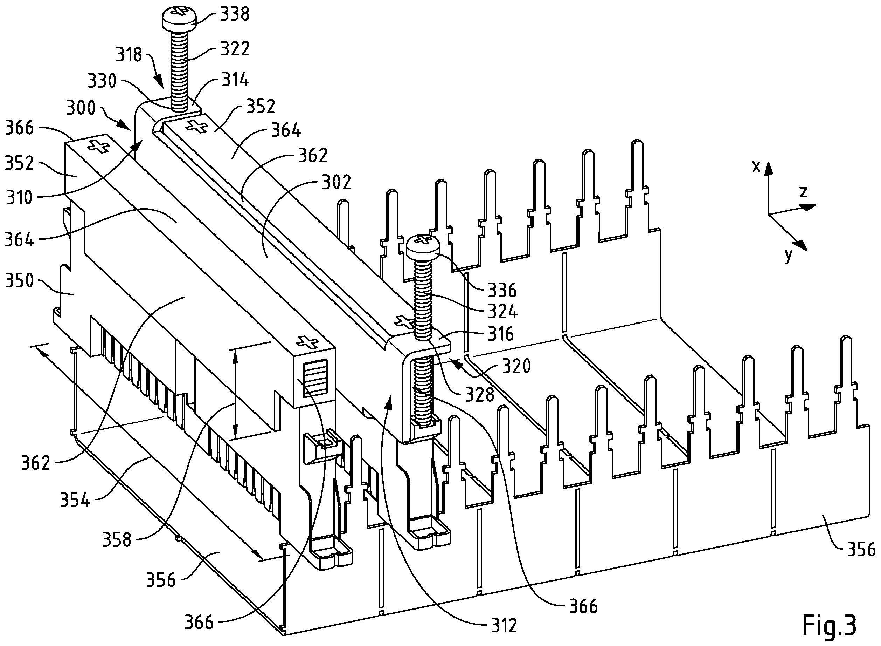

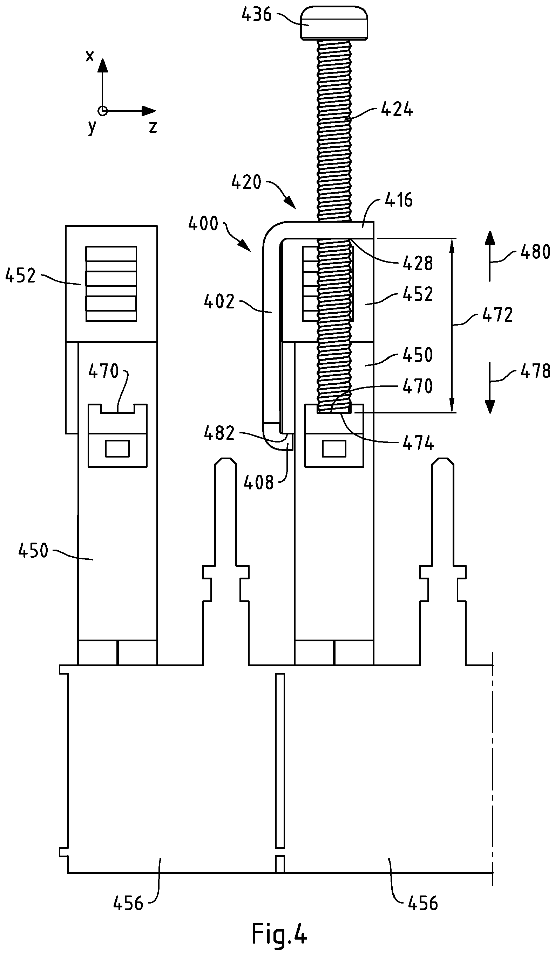

Die Figur 1 zeigt eine schematische Ansicht eines Ausführungsbeispiels einer Abziehvorrichtung 100 gemäß der vorliegenden Anmeldung. Die Abziehvorrichtung 100 wird insbesondere zum Abziehen eines auf einer elektrischen Anschlussleiste angebrachten Überspannungsschutzmagazins verwendet (vgl. Fig. 3 und 4).

Die Abziehvorrichtung 100 ist vorliegend aus Metall, insbesondere Edelstahl, gebildet. Die Abziehvorrichtung 100 umfasst einen Basisabschnitt 102. Der Basisabschnitt 102 ist insbesondere ein plattenförmiges Element 102 mit einer rechteckförmigen Grundfläche. Das plattenförmige Element 102 weist insbesondere zwei Längsseiten mit entsprechenden Kanten 104, 106 auf, eine untere Kante 106 und eine obere Kante 104 (nachfolgend wird teilweise auch nur von Längsseiten 104, 106 gesprochen). Darüber hinaus weist das plattenförmige Element 102 zwei gegenüberliegende Breiteseiten 110, 112 mit entsprechenden Kanten auf.

Wie zu erkennen ist, ist an dem Basisabschnitt 102 ein Vorsprung 108 bzw. eine Nase 108 angeordnet. Insbesondere kann der Vorsprung 108 als Lasche 108 gebildet sein. Alternativ kann ein Vorsprung stoffschlüssig befestigt sein, vorzugsweise angeschweißt sein. Insbesondere kann als Vorsprung eine Strebe bzw. ein balkenförmiges Element mit einer im Wesentlichen rechteckförmigen Querschnittsfläche angeordnet sein. Es versteht sich, dass auch eine einstückige Ausbildung von Basisabschnitt und Vorsprung bei anderen Varianten der Anmeldung möglich ist.

Der Vorsprung hat eine Länge 111 (y-Erstreckung), die vorzugsweise im Wesentlichen der Länge (y-Erstreckung) des abzuziehenden Überspannungsschutzmagazins entspricht.

Darüber hinaus verfügt die Abziehvorrichtung über zwei Abziehmodule 118, 120. Ein erstes Abziehmodul 118 ist an einer ersten Breitseite 110 des plattenförmigen Elements 102 angeordnet und ein weiteres Abziehmodul 120 ist an der gegenüberliegenden Breitseite 112 des plattenförmigen Elements 102 angeordnet. In der dargestellten bevorzugten Ausführungsform sind die Abziehmodule 118,120 als Schraubmechanismen 118, 120 gebildet. Bei anderen Varianten kann auch ein Klappmechanismus oder dergleichen als Abziehmodul eingesetzt werden.

Jeder Schraubenmechanismus 118, 120 weist vorliegend eine mit dem Basisabschnitt 102 befestigte Schraubenmutter 128,130 und eine Schraube 122, 124 auf. Wie zu erkennen, weist der Basisabschnitt an den gegenüberliegenden Breitseiten 110, 112 jeweils eine plattenförmige Vorkragung 114, 116 auf. Eine Vorkragung 114,116 kann insbesondere als Lasche 114, 116 gebildet sein.

Die plattenförmige Vorkragung 114,116 weist einen Winkel von im Wesentlichen 90 ° zu der Oberseite des plattenförmigen Elements 102 auf. Anders ausgedrückt erstreckt sich die Vorkragung 114, 116 in Richtung der Flächennormalen des plattenförmigen Elements 102 (vorliegend in z-Richtung). Insbesondere schließt die jeweilige Vorkragung 114,116 an der oberen Längsseite 104 an. Die Vorkragung 114,116 kann angeschweißt sein oder einstückig mit dem Basisabschnitt 102 gebildet sein, beispielsweise durch einen Biegevorgang.

Im vorliegenden Ausführungsbeispiel ist der der jeweilige Schraubenmechanismus 118, 120 an der jeweilige Vorkragung 114, 116 befestigt. Insbesondere ist die jeweilige Schraubenmutter 128,130 der Schraubmechanismen 118, 120 in einer jeweiligen Vorkragung 114,116 integriert. Vorzugsweise kann die integrierte Schraubenmutter als Bohrung mit einem Innengwinde gebildet sein, welches zu dem Außengewinde der eingesetzten Schraube 122, 124 korrespondiert.

Ferner ist der Abstand 132 bzw. die Länge 132 zwischen den Abziehmodulen 118, 120, insbesondere den jeweiligen Schrauben 122, 124, vorzugsweise zumindest größer als die Länge des abzuziehenden Überspannungsschutzmagazins. Die Höhe 134 (x-Erstreckung) des plattenförmigen Elements 102 ist vorzugsweise zumindest größer als die Höhe des abzuziehenden Überspannungsschutzmagazins. Wie ferner zu erkennen ist, kann die Länge einer Schraube 122, 124 zumindest doppelt so groß sein wie die Höhe 134 (x-Erstreckung) des plattenförmigen Elements 102 und insbesondere des abzuziehenden Überspannungsschutzmagazins.

Ferner sei angemerkt, dass jede Schraube 122, 124 einen Schraubenkopf 136, 138 aufweisen kann, um eine einfache Betätigung der Schraubmechanismen i18, 120, insbesondere der jeweiligen Schrauben 122, 124, zu ermöglichen.

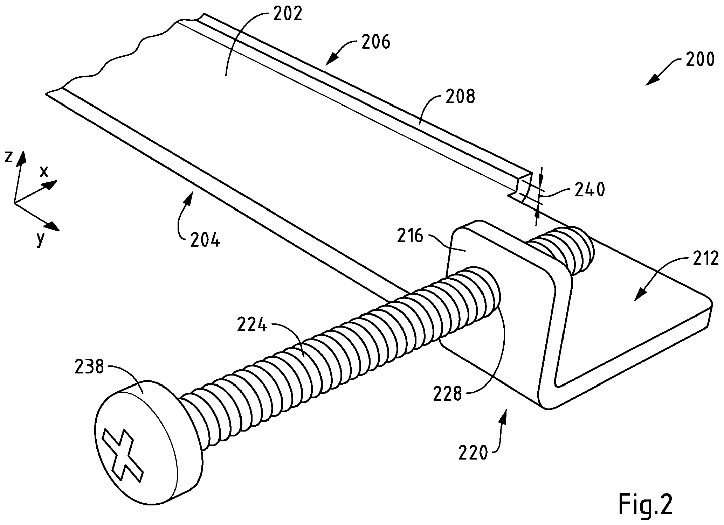

Die Figur 2 zeigt eine schematische Teilansicht des Ausführungsbeispiels einer Abziehvorrichtung 200 nach Figur 1. Insbesondere ist in der vergrößerten Ansicht der Figur 2 der Vorsprung 208 bzw. die Nase 208 deutlicher zu erkennen. Der Vorsprung 208 kann gegenüber dem plattenförmigen Element 208, insbesondere der flächigen bzw. planen Oberfläche des plattenförmigen Elements 208 eine Höhe 240 (in Richtung der Flächennormalen des plattenförmigen Elements 208) zwischen 1 mm und 50 mm aufweisen, vorzugsweise zwischen 1 mm und 3 mm.

Die Figur 3 zeigt eine schematische Ansicht des Ausführungsbeispiels einer Abziehvorrichtung 300 nach Figur 1 in einem angebrachten Abziehzustand der Abziehvorrichtung 300.

Zunächst ist in der Figur 3 ein Halter 356 eines (nicht dargestellten) Verteilerkastens, insbesondere ein MFG, dargestellt. Beispielhaft sind auf dem Halter 356 zwei elektrische Anschlussleisten 350 (insbesondere der Firma Cobinet) montiert. Zum Schutz der aktiven Bauteile ist auf jeder Anschlussleiste 350 ein Überspannungsschutzmagazin 352 angebracht bzw. aufmontiert.

In dem dargestellten, an dem abzuziehenden Überspannungsschutzmagazin 352 angebrachten Abziehzustand der Abziehvorrichtung 300 ist das plattenförmige Element 302 im Wesentlichen planparallel zu einer Seitenwand 362 des Überspannungsschutzmagazins 352. Die plattenförmigen Vorkragungen 314, 316 sind vorliegend im Wesentlichen planparallel zu der Oberseite 364 des Überspannungsschutzmagazins 352. Ferner befinden sich die Abziehmodule 318, 320 an den seitlichen schmalen Stirnseiten 366 des Überspannungsschutzmagazins 352. Hierbei bezeichnet 358 die Höhe des Überspannungsschutzmagazins 352 und 354 Länge 354 des Überspannungsschutzmagazins 352
Die Funktionsweise der Abziehvorrichtung und insbesondere ein anmeldungsgemäßer Abziehvorgang werden nachfolgend näher mit Hilfe der Figur 4 beschrieben.

Figur 4 zeigt eine schematische Teilansicht des Ausführungsbeispiels einer Abziehvorrichtung 400 nach Figur 3 in dem angebrachten Abziehzustand der Abziehvorrichtung.

Wie zu erkennen ist, kontaktiert (in diesem Abziehzustand) ein Ende 474 der Schraube 424 eine von der elektrischen Anschlussleiste 450 bereitgestellte Anschlagsfläche 470 (in entsprechender Weise kann die weitere (nicht dargestellte) Schraube eine weiteren Anschlagsfläche kontaktieren). Wenn nun die dargestellte Schraube 424 betätigt wird, insbesondere von einem Nutzer gedreht wird, wird eine Kraft durch die Drehbewegung auf die Anschlagsfläche 470 in Richtung 478 des Halters 456 ausgeübt. Da eine Bewegung der Anschlussleiste 450 in Richtung 478 des Halters 456, also insbesondere nach unten, blockiert ist, wird eine Bewegung der Abziehvorrichtung 400 in die entgegengesetzte Richtung 480 (aufgrund der integrierten Schraubenmutter 428) bewirkt. Der Vorsprung 408 hintergreift, insbesondere kontaktiert, eine untere Kante 482 (an der Unterseite des Überspannungsschutzmagazins 452) des Überspannungsschutzmagazins 452. Insbesondere wird durch die Drehbewegung der Schraube 424 eine Vergrößerung des Abstands 472 zwischen der Vorkragung 416 und der Anschlagsfläche 470 und damit insbesondere des Abstands zwischen der Anschlussleiste 450 und des Überspannungsschutzmagazins 452 bewirkt (so dass eine Kraft durch den Vorsprung 408 auf das angebrachte Überspannungsschutzmagazins 452 (via der Kante 482 ausgeübt wird).

Insbesondere durch das Hintergreifen, insbesondere dem Kontakt zwischen dem Vorsprung 408 und der Unterseite 482 bzw. der Unterkante 482 des Überspannungsschutzmagazins 452, ist eine Kraft von der Abziehvorrichtung 400 auf das Überspannungsschutzmagazin 452 übertragbar, so dass eine (Abzieh-)Bewegung des Überspannungsschutzmagazins 452 in eine Richtung 480 entfernt von der Anschlussleiste 450 bewirkt wird. Ein versehentliches Abziehen der Anschlussleiste 450 wird aufgrund der von der Schraube 424 auf die Anschlussleiste 450 via der Anschlagsfläche 470 übertragenen Kraft verhindert.

Vorzugsweise können bei einem Abziehvorgang die beiden Schrauben 422, 424 nahezu gleichzeitig betätigt werden (z.B. abwechselndes Drehen des ersten und weiteren Schraubenmechanismus um eine bestimmte Anzahl an Drehungen (z.B. 1 bis 5 Umdrehungen)).

## Patentansprüche

1. Abziehvorrichtung (100, 200, 300, 400) zum Abziehen eines auf einer elektrischen Anschlussleiste (350, 450) angebrachten Überspannungsschutzmagazins (352, 452), umfassend:
- einen Basisabschnitt (102, 202, 302, 402) mit einem Vorsprung (108, 208, 408), eingerichtet zum Hintergreifen des angebrachten Überspannungsschutzmagazins (352, 452),
- zwei an gegenüberliegenden Seiten (110, 112, 212, 310, 312, 412) des Basisabschnitts (102, 202, 302, 402) befestigte Abziehmodule (118, 120, 220, 318, 320, 420),
- wobei die Abziehmodule (118, 120, 220, 318, 320, 420) eingerichtet sind, bei einem Abziehvorgang mit einer jeweiligen durch die Anschlussleiste (350, 450) bereitgestellten Anschlagsfläche (470) derart zusammenzuwirken, dass durch eine Betätigung des jeweiligen Abziehmoduls (118, 120, 220, 318, 320, 420) eine Kraft durch den Vorsprung (108, 208, 408) auf das angebrachte Überspannungsschutzmagazin (352, 452) ausgeübt wird, so dass das Überspannungsschutzmagazin (352, 452) von der Anschlussleiste (350, 450) abgezogen wird.

2. Abziehvorrichtung (100, 200, 300, 400) nach Anspruch 1, **dadurch gekennzeichnet, dass**
- der Basisabschnitt (102, 202, 302, 402) ein plattenförmiges Element (102, 202, 302, 402) ist, und
- der Vorsprung (108, 208, 408) gegenüber dem plattenförmigen Element (102, 202, 302, 402) eine Höhe zwischen 1 mm und 50 mm aufweist, vorzugsweise zwischen 2 mm und 3 mm.

3. Abziehvorrichtung (100, 200, 300,400) nach Anspruch 1 oder 2, **dadurch gekennzeichnet, dass**
- der Vorsprung (108, 208, 408) eine Länge (111) aufweist, die im Wesentlichen der Länge (354) des Überspannungsschutzmagazins (352,452) entspricht.

4. Abziehvorrichtung (100, 200, 300, 400) nach einem der vorherigen Ansprüche, **dadurch gekennzeichnet, dass**
- an den zwei gegenüberliegenden Seiten (110, 112, 212, 310, 312, 412) des Basisabschnitts (102, 202, 302, 402) jeweils eine Vorkragung (114,116, 216,314, 316, 416) aufweist,
- wobei an jeder Vorkragung (114,116, 216, 314, 316, 416) ein Abziehmodul (118, 120, 220, 318, 320, 420) befestigt ist.

5. Abziehvorrichtung (100, 200, 300,400) nach einem der vorherigen Ansprüche, **dadurch gekennzeichnet, dass**
- ein Abziehmodul (118, 120, 220, 318, 320, 420), vorzugsweise jedes Abziehmodul (118, 120, 220, 318, 320, 420), durch ein Schraubenmechanismus (118, 120, 220, 318, 320, 420) gebildet ist.

6. Abziehvorrichtung (100, 200, 300, 400) nach Anspruch 5, **dadurch gekennzeichnet, dass**
- der Schraubenmechanismus (118, 120, 220, 318, 320,420) eine mit dem Basisabschnitt (102, 202, 302, 402) befestigte Schraubenmutter (128, 130, 228, 328, 330, 428) und eine Schraube (122, 124, 224, 322, 324,424) aufweist.

7. Abziehvorrichtung (100, 200, 300, 400) nach Anspruch 6, **dadurch gekennzeichnet, dass**
- der Basisabschnitt (102, 202, 302, 402) an den gegenüberliegenden Seiten (110, 112, 212, 310, 312,412) jeweils eine Vorkragung (114, 116, 216, 314, 316,416) aufweist,
- wobei die Vorkragung (114,116, 216, 314, 316,416) die Schraubenmutter (128, 130, 228, 328, 330, 428) aufweist.

8. Abziehvorrichtung (100, 200, 300,400) nach Anspruch 7, **dadurch gekennzeichnet, dass**
- jeder Schraubenmechanismus (118, 120, 220, 318, 320, 420) eingerichtet ist, derart, dass bei dem Abziehvorgang ein Ende der jeweiligen Schraube (122,124, 224, 322, 324, 424) die jeweilige Anschlagsfläche (470) kontaktiert und ein Betätigen der jeweiligen Schraube (122,124, 224, 322, 324,424) eine Vergrößerung des Abstands (472) zwischen der Vorkragung (114,116, 216, 314, 316, 416) und der Anschlagsfläche (470) bewirkt, so dass eine Kraft durch den Vorsprung (108, 208, 408) auf das angebrachte Überspannungsschutzmagazin (352, 452) ausgeübt wird.

9. Abziehvorrichtung (100, 200, 300, 400) nach einem der vorherigen Ansprüche, **dadurch gekennzeichnet, dass**
- der Abstand (132) zwischen den an den gegenüberliegenden Seiten (110, 112, 212, 310, 312, 412) des Basisabschnitts (102, 202, 302, 402) befestigten Abziehmodulen (118,120, 220, 318, 320, 420) zumindest größer ist als die Länge (354) des Überspannungsschutzmagazins (352, 452).

10. Abziehvorrichtung (100, 200, 300, 400) nach einem der vorherigen Ansprüche, **dadurch gekennzeichnet, dass**
- der Basisabschnitt (102, 202, 302, 402) aus Metall gebildet ist, insbesondere aus Edelstahl,
und/oder
- der Vorsprung (108, 208, 408) aus Metall gebildet ist, insbesondere aus Edelstahl.

11. Verwendung einer Abziehvorrichtung (100, 200, 300, 400) nach einem der vorherigen Ansprüche zum Abziehen eines auf einer elektrischen Anschlussleiste (350, 450) angebrachten Überspannungsschutzmagazins (352, 452).

## Claims

1. A puller device (100, 200, 300, 400) for pulling off an overvoltage protection magazine (352, 452) attached at an electrical terminal block (350, 450), comprising:
- a base section (102, 202, 302, 402) having a projection (108, 208, 408) configured to engage behind the attached overvoltage protection magazine (352, 452),
- two puller modules (118, 120, 220, 318, 320, 420) attached to opposite sides (110, 112, 212, 310, 312, 412) of the base section (102, 202, 302, 402),
- wherein the puller modules (118, 120, 220, 318, 320, 420) are arranged to cooperate with a respective stop surface (470) provided by the terminal block (350, 450) during a pulling off operation in such a way that by an actuation of the respective puller module (118, 120, 220, 318, 320, 420) exerts a force through the projection (108, 208, 408) on the attached overvoltage protection magazine (352, 452) so that the overvoltage protection magazine (352, 452) is pulled off the terminal block (350, 450).

2. The puller device (100, 200, 300, 400) according to claim 1, **characterized in that**
- the base section (102, 202, 302, 402) is a plate-shaped element (102, 202, 302, 402), and
- the protrusion (108, 208, 408) comprises a height of between 1 mm and 50 mm, preferably between 2 mm and 3 mm, with respect to the plate-shaped element (102, 202, 302, 402).

3. The puller device (100, 200, 300, 400) according to claim 1 or 2, **characterized in that**
- the protrusion (108, 208, 408) comprises a length (111) substantially corresponding to the length (354) of the overvoltage protection magazine (352, 452).

4. The puller device (100, 200, 300, 400) according to any of the previous claims, **characterized in that**
- at each of the two opposite sides (110, 112, 212, 310, 312, 412) of the base section (102, 202, 302, 402) comprises an overhang (114, 116, 216, 314, 316, 416),
- wherein a puller module (118, 120, 220, 318, 320, 420) is attached to each overhang (114, 116, 216, 314, 316, 416).

5. The puller device (100, 200, 300, 400) according to any one of the preceding claims, **characterized in that**
- a puller module (118, 120, 220, 318, 320, 420), preferably each puller module (118, 120, 220, 318, 320, 420), is formed by a screw mechanism (118, 120, 220, 318, 320, 420).

6. The puller device (100, 200, 300, 400) according to claim 5, **characterized in that**
- the screw mechanism (118, 120, 220, 318, 320, 420) comprises a screw nut (128, 130, 228, 328, 330, 428) fixed with the base section (102, 202, 302, 402) and a screw (122, 124, 224, 322, 324, 424).

7. The puller device (100, 200, 300, 400) according to claim 6, **characterized in that**
- the base section (102, 202, 302, 402) comprises an overhang (114, 116, 216, 314, 316, 416) on each of the opposite sides (110, 112, 212, 310, 312, 412),
- wherein the overhang (114, 116, 216, 314, 316, 416) comprises the nut (128, 130, 228, 328, 330, 428).

8. The puller device (100, 200, 300, 400) according to claim 7, **characterized in that**
- each screw mechanism (118, 120, 220, 318, 320, 420) is configured such that, during the pulling operation, one end of the respective screw (122, 124, 224, 322, 324, 424) contacts the respective stop surface (470) and an actuation of the respective screw (122, 124, 224, 322, 324, 424) causes an increase in the distance (472) between the overhang (114, 116, 216, 314, 316, 416) and the stop surface (470) so that a force is applied through the protrusion (108, 208, 408) to the attached overvoltage protection magazine (352, 452).

9. The puller device (100, 200, 300, 400) according to any one of the previous claims, **characterized in that**
- the distance (132) between the puller modules (118, 120, 220, 318, 320, 420) attached to opposite sides (110, 112, 212, 310, 312, 412) of the base section (102, 202, 302, 402) is at least greater than the length (354) of the overvoltage protection magazine (352, 452).

10. The puller device (100, 200, 300, 400) according to any one of the preceding claims, **characterized in that**
- the base section (102, 202, 302, 402) is formed of metal, in particular stainless steel,
and/or
- the projection (108, 208, 408) is formed of metal, in particular of stainless steel.

11. Use of a puller device (100, 200, 300, 400) according to any one of the preceding claims for pulling off an overvoltage protection magazine (352, 452) attached at an electrical terminal block (350, 450).

## Revendications

1. Dispositif de retirage (100, 200, 300, 400) pour retirer un magasin de protection contre des surtensions (352, 452) monté sur une barre de raccordement électrique (350, 450), comprenant :
- une partie de base (102, 202, 302, 402) avec une saillie (108, 208, 408) configuré pour saisir par l'arrière le magasin de protection contre des surtensions (352, 452) monté,
- deux modules de retirage (118, 120, 220, 318, 320, 420) fixés à des côtés opposés (110, 112, 212, 310, 312, 412) de la partie de base (102, 202, 302, 402),
- où les modules de retirage (118, 120, 220, 318, 320, 420) sont configurés pour coopérer, lors d'une opération de retirage, avec une surface de butée (470) respective fourni par la barre de raccordement (350, 450) de telle sorte que, par un actionnement du module de retirage respectif (118, 120, 220, 318, 320, 420), une force est exercée par la saillie (108, 208, 408) sur le magasin de protection contre des surtensions (352, 452) monté, de sorte que le magasin de protection contre des surtensions (352, 452) est retiré de la barre de raccordement (350, 450).

2. Dispositif de retirage (100, 200, 300, 400) selon la revendication 1, **caractérisé en ce que**
- la partie de base (102, 202, 302, 402) est un élément en forme de plaque (102, 202, 302, 402), et
- la saillie (108, 208, 408) a, par rapport à l'élément en forme de plaque (102, 202, 302, 402), une hauteur entre 1 mm et 50 mm, de préférence entre 2 mm et 3 mm.

3. Dispositif de retirage (100, 200, 300, 400) selon la revendication 1 ou 2, **caractérisé en ce que**
- la saillie (108, 208, 408) a une longueur (111) qui correspond essentiellement à la longueur (354) du magasin de protection contre des surtensions (352, 452).

4. Dispositif de retirage (100, 200, 300, 400) selon l'une des revendications précédentes, **caractérisé en ce que**
- a une saillie de col (114, 116, 216, 314, 316, 416) sur les deux côtés opposés (110, 112, 212, 310, 312, 412) respectifs de la partie de base (102, 202, 302, 402),
- où un module de retirage (118, 120, 220, 318, 320, 420) est fixé à chaque saillie de col (114,116, 216, 314, 316, 416).

5. Dispositif de retirage (100, 200, 300, 400) selon l'une des revendications précédentes, **caractérisé en ce que**
- un module de retirage (118, 120, 220, 318, 320, 420), de préférence chaque module de retirage (118, 120, 220, 318, 320, 420), est formé par un mécanisme à vis (118, 120, 220, 318, 320, 420).

6. Mécanisme de retirage (100, 200, 300, 400) selon la revendication 5, **caractérisé en ce que**
- le mécanisme à vis (118, 120, 220, 318, 320, 420) comprend un écrou (128, 130, 228, 328, 330, 428) fixé à la partie de base (102, 202, 302, 402) et une vis (122, 124, 224, 322, 324, 424).

7. Dispositif de retirage (100, 200, 300, 400) selon la revendication 6, **caractérisé en ce que**
- la partie de base (102, 202, 302, 402) a une saillie de col (114, 116, 216, 314, 316, 416) respective sur des côtés opposés (110, 112, 212, 310, 312, 412),
- où la saillie de col (114, 116, 216, 314, 316, 416) comprend l'écrou (128, 130, 228, 328, 330, 428).

8. Dispositif de retirage (100, 200, 300, 400) selon la revendication 7, **caractérisé en ce que**
- chaque mécanisme de vis (118, 120, 220, 318, 320, 420) est configuré pour, lors de l'opération de retirage, une extrémité de la vis respective (122, 124, 224, 322, 324, 424) entre en contact avec la surface de butée respective (470) et qu'un actionnement de la vis respective (122, 124, 224, 322, 324, 424) provoque une augmentation de la distance (472) entre la saillie de col (114, 116, 216, 314, 316, 416) et la surface de butée (470), de sorte qu'une force est exercée par la saillie (108, 208, 408) sur le magasin de protection contre des surtensions (352, 452) monté.

9. Dispositif de retirage (100, 200, 300, 400) selon l'une des revendications précédentes, **caractérisé en ce que**
- la distance (132) entre les modules de retirage (118, 120, 220, 318, 320, 420) fixés sur les côtés opposés (110, 112, 212, 310, 312, 412) de la partie de base (102, 202, 302, 402) est au moins supérieure à la longueur (354) du magasin de protection contre des surtensions (352, 452).

10. Dispositif de retirage (100, 200, 300, 400) selon l'une des revendications précédentes, **caractérisé en ce que**
- la partie de base (102, 202, 302, 402) est formée de métal, en particulier d'acier inoxydable,
et/ou
- la saillie (108, 208, 408) est formée de métal, en particulier d'acier inoxydable.

11. Utilisation d'un dispositif de retirage (100, 200, 300, 400) selon l'une des revendications précédentes pour retirer un magasin de protection contre des surtensions (352, 452) monté sur une barre de raccordement électrique (350, 450).
